# EUROPEAN PATENT APPLICATION

(11) **EP 3 396 271 A1**
(43) Date of publication of application: **31.10.2018**
(21) Application number: 17168061.4
(22) Date of filing: 25.04.2017
(51) Int. Cl.: F24J 2/46, F24J 2/54, H02S 50/00, H02S 20/30

(54) **APPARATUS FOR MOUNTING A SOLAR ENERGY DEVICE AND METHOD OF OPERATION**

(71) Applicant: Vestel Elektronik Sanayi ve Ticaret A.S., 45030 Manisa (TR)
(72) Inventor: YALIN, Nevzat, 45030 Manisa (TR); ÖZEN, Erol, 45030 Manisa (TR); ÖZKÜÇÜK, Serhat, 45030 Manisa (TR)
(74) Representative: Flint, Adam

(57) **Abstract**

Apparatus (1) for mounting a solar energy device (2) has a support (3) on or in which a solar energy device (2) may be mounted. The support (3) is movable so as to be able to track movement of the Sun. A device (7) provides a measure of the separation of the support (3) from a support (3) of an adjacent apparatus (1). This enables a solar energy device (2) that has not been correctly moved or repositioned to be identified.

## Description

### Technical Field

The present disclosure relates to apparatus for mounting a solar energy device and a method of operating a plurality of a plurality of apparatus that carry a solar energy device.

### Background

Solar energy devices, including for example solar panels and the like, are of growing importance. Solar farms are used for example to generate electric power or heat by using a large number of solar panels. Some apparatus for supporting the solar panels enable the solar panel to be repositioned, for example to track movement of the Sun during the day.

### Summary

According to a first aspect disclosed herein, there is provided apparatus for mounting a solar energy device, the apparatus comprising:
a support on or in which a solar energy device may be mounted, the support being movable so as to be able to track movement of the Sun; and
a device for providing a measure of the separation of the support from a support of an adjacent apparatus for mounting a solar energy device.

This enables a support that has not correctly moved to be identified. This can be done in an automated manner and avoids a human operator having to physically inspect or access the apparatus. This is of particular importance in a solar farm, which may have a very large number of such apparatus and solar panels and may also be located in an inaccessible or inhospitable location.

The device may provide a measure of the separation of the support from another support in the sense that the device has a property that depends on the separation or the device outputs some value that is a function of the separation. The device need not literally be used to measure the separation (distance) of the support from another support.

The support may be carried by a mount so as to be movable. The mount may be for example one or more of a ball joint, and articulated mount, a spring mounting, etc.

In an example, the apparatus comprises a motor for moving the support.

In an example, the apparatus comprises a solar energy device mounted in or on the support.

In an example, the device is a magnet.

In an example, the device is a permanent magnet.

In another example, the device is an electromagnet. In an example, the apparatus is arranged such that the electromagnet is powered in use by a solar energy device mounted on or in the apparatus.

There may also be provided a solar farm comprising a plurality of apparatus as described above, wherein at least one edge of a support of an apparatus has a magnet device and at last one adjacent edge of an adjacent apparatus has a magnet device, the magnet devices being for providing a measure of the separation between said adjacent edges.

In an example, said magnet devices are arranged such that their magnetic fields are substantially aligned when the supports of said adjacent apparatus are aligned. For example, the respective North and South poles of the magnets may be located at substantially the same positions on the adjacent apparatus.

According to a second aspect disclosed herein, there is provided a method of operating a plurality of a plurality of apparatus, in which at least some of the apparatus comprise a support which carries a solar energy device and at least some of the apparatus comprise a device for providing a measure of the separation of the support from the support of an adjacent apparatus, the supports being movable so as to be enable the solar energy device to track movement of the Sun, the method comprising:
moving at least some of the supports to cause their solar energy devices to track movement of the Sun; and
obtaining a measure of the separation of a support from an adjacent support; and
identifying from the measure of the separation a solar energy device that has not been moved so as to be positioned correctly.

As mentioned, the device need not literally be used to measure the separation (distance) of the support from another support. On the contrary, it is sufficient if the device provides a measure of the separation of the support from another support in the sense that the device has a property that depends on the separation or the device outputs some value that is a function of the separation.

In an example, the measure of the separation of a support from an adjacent support is obtained from the interaction of magnetic fields produced by magnets on the adjacent supports. In an example, at least some of the magnets are electromagnets.

### Brief Description of the Drawings

To assist understanding of the present disclosure and to show how embodiments may be put into effect, reference is made by way of example to the accompanying drawings in which:
Figure 1 shows schematically an example of an apparatus for mounting a solar energy device adjacent another such apparatus;
Figure 2 shows schematically an example a number of apparatus each of which carries a solar panel mounted on or in respective supports;
Figure 3 shows schematically a plan view of a number of supports / solar panels;
Figure 4 shows schematically a map of magnetic fields for the supports / solar panels of Figure 3; and
Figure 5 shows schematically a magnetic interactive force map.

### Detailed Description

A solar power system typically employs a number of solar energy devices, which convert incident solar energy into another form of energy, such as electrical energy or thermal energy. A solar energy device may be in the form of for example a solar panel, which has a number of solar cells, which generate electrical power from incident solar energy. A solar cell is an electrical device that converts the energy of light into electricity. A solar cell may be for example a photovoltaic device which is a semiconductor device that converts light energy directly into electricity by the photovoltaic effect. As an alternative, the solar energy device may be in the form of "concentrators", which concentrate the solar energy into a small area. The heat energy may be used directly or may be used to drive for example a heat engine which in turn is connected to an electrical power generator for producing electrical energy.

In some solar power systems, the solar energy device is moved or repositioned over time so as to at least partially track the (apparent) movement of the Sun during the day so as to maximise the amount of solar energy that is incident on the solar energy device during the day. For maximum efficiency, the angle of incidence on the solar energy device is minimised. That is, the light-receiving surface of the solar energy device is preferably maintained at or as close to 90° to the direction of the Sun as practical.

A large number of solar panels may be grouped together to form a so-called "solar park" or "solar farm". A solar farm may have for example hundreds or thousands of solar panels and up to hundreds of thousands or more solar panels. In some known solar farms, each solar panel can be individually moved so as to at least partially track the position of the Sun during the day. For example, it is known to use single axis trackers and dual axis trackers, which have one and two axes of rotation respectively. The movement of the solar panels may be "passive", using for example the sunlight as a heat source to heat a fluid in a piston to drive the movement of the solar panel. The movement of the solar panels may alternatively or additionally be "active", using for example drive motors and optionally a gear train to drive the movement of the solar panel.

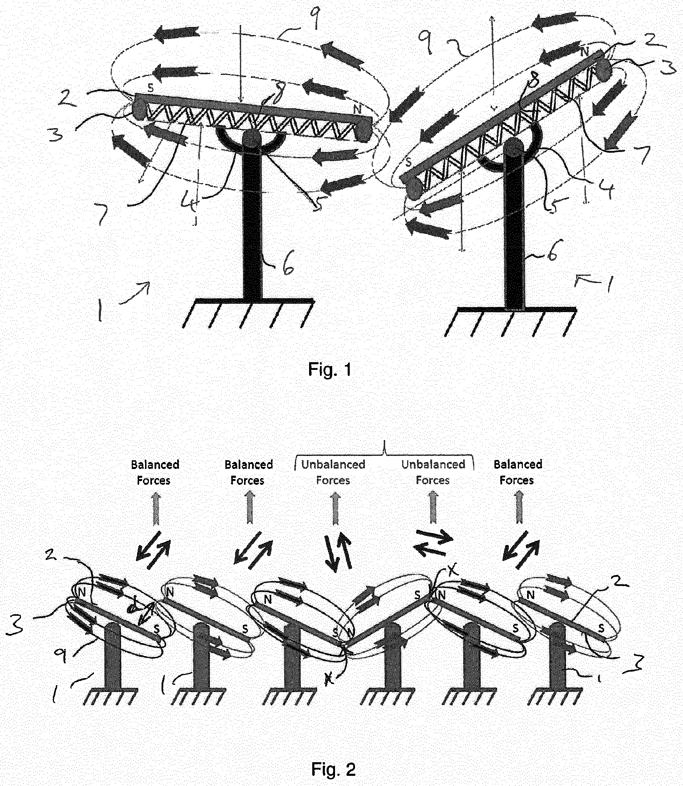

Referring now to Figure 1, there is shown an example of an apparatus 1 for mounting a solar energy device 2. The figure shows two apparatus 1 adjacent each other. The apparatus 1 may be part of a so-called solar farm which may have many such apparatus 1. For example, the solar farm may have hundreds or thousands and up to hundreds of thousands or more such apparatus 1.

In this example, the solar energy device 2 is in the form of a solar panel 2 which has plural solar cells, which generate electrical power from incident solar energy. As noted, a solar cell is an electrical device that converts the energy of light into electricity. A solar cell may be for example a photovoltaic device which is a semiconductor device that converts light energy directly into electricity by the photovoltaic effect. As an alternative, the solar energy device 2 may be in the form of "concentrators", which concentrate the solar energy into a small area and which again may be provided in as a solar panel 2. The heat energy may be used directly or may be used to drive for example a heat engine which in turn is connected to an electrical power generator for producing electrical energy.

The solar panel 2 is mounted in or on a support 3. The support 3 may be in the form of a frame or a bracket or a plate, and the solar panel 2 is fixed to the support 3.

The support 3 is movable so as to be able to track the (apparent) movement of the Sun during the day. A number of different arrangements of enabling the support 3 to be movable are possible. For example, the support 3 may be drive to move by a passive system. A number of passive driving systems for moving and repositioning solar panels 2 and/or solar panel supports 3 are known, including for example using incident sunlight as a heat source to heat a fluid in a piston to drive the movement of the solar panel 2 and/or support 3. The movement of the solar panels 2 and/or support 3 may alternatively or additionally be "active", using for example a drive motor and optionally a gear train to drive the movement of the solar panel 2 and/or support 3.

In the example shown, the support 3 and solar panel 2 are fixed to or by a mount 4 so as to be movable. The mount 4 may use or be for example one or more of a ball joint, and articulated mount, a spring mounting, etc. In the example shown, a motor 5 drives the movement of the support 3 and solar panel 2. The motor 5 may be for example an electric motor. The motor 5 may be powered by electricity generated by the solar panel 2 and/or from some external power source. The mount 4 and motor 5 are carried by a support post 6 to raise the solar panel 2 above the ground and allow the solar panel 2 to be repositioned.

The movement of the support 3 and solar panel 2 may be carried out under computer control. There may for example be some computing device (not shown), including for example a processor, which is local to the apparatus 1, for example provided as part of the apparatus 1 or located physically nearby to the apparatus 1, and which controls movement of the support 3 and solar panel 2. Alternatively or additionally, there may be a "central" computing device (not shown), including for example a processor, which controls movement of a number and preferably all of the supports 3 and solar panels 2 in a solar farm. One or more position sensors may be associated with the apparatus 1 to provide position or orientation data to the control computer.

A problem is that a particular apparatus 1 may not operate to move the support 3 and solar panel 2 as desired. For example, there may be a failure in the motor 5 or the mount 4 which prevents the support 3 and solar panel 2 being repositioned properly. If position sensors are associated with the apparatus 1 to provide position or orientation data, one or more of the sensors may fail completely or may give inaccurate data to the control computer. In the case where there are a number of such apparatus 1 and/or if the apparatus 1 are located in a location that is remote or difficult to access, it can be difficult for a human operator to inspect the apparatus 1 to determine if there is a failure somewhere in the positioning system. This is particularity the case where the apparatus 1 is part of a solar farm in a remote or an inhospitable area, such as a desert or on a rooftop that is difficult to access.

In accordance with the present disclosure, the apparatus 1 has a device 7 for providing a measure of the separation of the support 3 from a support 3 of an adjacent apparatus 1. The device 1 may provide a measure of the separation of the support 3 from another support 3 in the sense that the device 1 has a property that depends on the separation or the device 1 outputs some value that is a function of the separation. The device 1 need not literally be used to measure the separation (distance) of the support 1 from another support 1.

The device 7 may be for example some sensing arrangement. The device 7 may use for example laser diodes or the like to emit light which is reflected from the adjacent or a neighbouring support 3 and detected by the device 7. Processing of the received reflected light can give a measure of the separation of the support 3 from a support 3 of an adjacent apparatus 1 in a manner known per se.

In the example shown, the device 7 is or comprises a magnet. The magnet may be a permanent magnet. The magnet may alternatively be an electromagnet. An electromagnet is advantageous in that it can effectively be turned off if desired or when not required, which avoids possible hindrance to movement of the solar panel 2 which can be caused by use of permanent magnets. The electromagnet may be powered by electricity generated by the solar panel 2 and/or from some external power source and is preferably a low power electromagnet. The coil 8 of the electromagnet of the device 7 is indicated in Figure 1. There may be a magnet device 7 along one or more, such as all, of the edges of the support panel 3 / solar panel 2.

Referring now to Figure 2, this shows schematically a number of apparatus 1 each of which carries a solar panel 2 mounted on or in respective supports 3. The apparatus 1 may be part of a large array of such apparatus 1 in a solar farm. Looking from the left side of the figure, the first three apparatus 1 and the last two apparatus 1 have had their supports 3 and solar panels 2 oriented correctly. As such, the supports 3 and solar panels 3 of these apparatus 1 are generally all parallel to each other. As will be appreciated, particularly from reviewing the figure, this means that adjacent edges of the respective supports 3 and solar panels 3 of these apparatus 1 will have a separation d that is substantially the same. However, the fourth apparatus 1 from the left has not functioned correctly so that its support 3 and solar panel 2 has not been oriented correctly and so is facing the "wrong" direction. Accordingly, the support 3 and solar panel 2 of this apparatus 1 is not parallel to the supports 3 and solar panels 3 of the other apparatus 1. As will be appreciated, particularly from reviewing the figure, this means that the distance x between edges of this incorrectly positioned support 3 and solar panel 2 and adjacent edges of the support 3 and solar panel 2 of the adjacent correctly positioned support 3 and solar panel 2 is different from d. That is and for the purpose of illustration for this case, the distance x between the edges of the incorrectly positioned support 3 and solar panel 2 and adjacent correctly positioned support 3 and solar panel 2 is less than the distance d between adjacent edges of correctly positioned supports 3 and solar panels 2.

Each of the apparatus 1 in this example has a device 7 for providing a measure of the separation of the support 3 from a support 3 of an adjacent apparatus 1 in which the device 7 is or comprises a magnet, such as an electromagnet. The magnetic field 9 generated by the magnet of the device 7 is indicated schematically for each of the apparatus 1 with arrows indicating the direction of the magnetic fields. The magnetic fields 9 of adjacent apparatus 1 interact. As will be appreciated immediately, the interaction between magnetic fields 9 of adjacent apparatus 1 will in essence be substantially the same, in direction and magnitude, for those pairs of adjacent apparatus 1 in which the supports 3 and solar panels 2 of the adjacent apparatus 1 are generally aligned, as will be the case where for example the supports 3 and solar panels 2 of the adjacent apparatus 1 are positioned correctly. This is indicated by the designation "Balanced Forces" in Figure 2. On the other hand, where the support 3 and solar panel 2 of one of the pairs of adjacent apparatus 1 is not aligned with the support 3 and solar panel 2 of the other of the pairs of adjacent apparatus 1, the interaction between magnetic fields 9 of the adjacent apparatus 1 will be different, in one or both of direction and magnitude, from the interaction between magnetic fields 9 of adjacent apparatus 1 in which the supports 3 and solar panels 2 of the adjacent apparatus 1 are generally aligned. This is indicated by the designation "unbalanced Forces" in Figure 2.

These different interactions between magnetic fields 9 of adjacent apparatus 1 depending on whether the respective supports 3 and solar panels 2 are aligned or not provides a measure of the separations of the (edges of the) respective supports 3 and solar panels 2. In particular, the different interactions between magnetic fields 9 of adjacent apparatus 1 can be used to identify that a particular support 3 and solar panel 2 of an apparatus 1 has not been moved or repositioned correctly. A number of ways of detecting this are possible. For example, one or more magnetometers may be mounted in the locality, for example on some or all of the apparatus 1, to measure the magnetic field in the region of adjacent edges of the supports 3 and solar panels 2 and to provide an output to for example a local or remote computer discussed above where the data can be analysed to identify the incorrectly aligned support 3 and solar panel 2. As a specific example, each support 3 and/or solar panel 2 may have a magnetometer at one or more (such as all) edges of the support 3 and/or solar panel 2. In another example, particularly where an electric motor is used to move the support 3 and/or solar panel 2, the current required to drive the electric motor will vary according to the strength of the interaction of the magnetic fields of adjacent apparatus 1 and this can be detected and analysed using for example a local or remote computer discussed above to identify the incorrectly aligned support 3 and solar panel 2.

To facilitate the measuring of the magnetic fields of adjacent apparatus 1 in this example, the magnet devices 7 may be aligned with each other, at least at adjacent edges of supports 3 / solar panels 2. That is, for adjacent edges of supports 3 / solar panels 2, the magnet devices 7 are aligned such that the North and South poles of the magnet devices 7 are positioned at similar places on the respective supports 3 / solar panels 2. This means that a North pole of a magnet device 7 on one support 3 or solar panel 2 is adjacent a South pole of a magnet device 7 on an adjacent support 3 or solar panel 2. In the case that the magnet devices 7 are or comprise electromagnets, this can be achieved by for example aligning the coils 8 of the electromagnets with the corresponding edges of the supports 3 / solar panels 2.

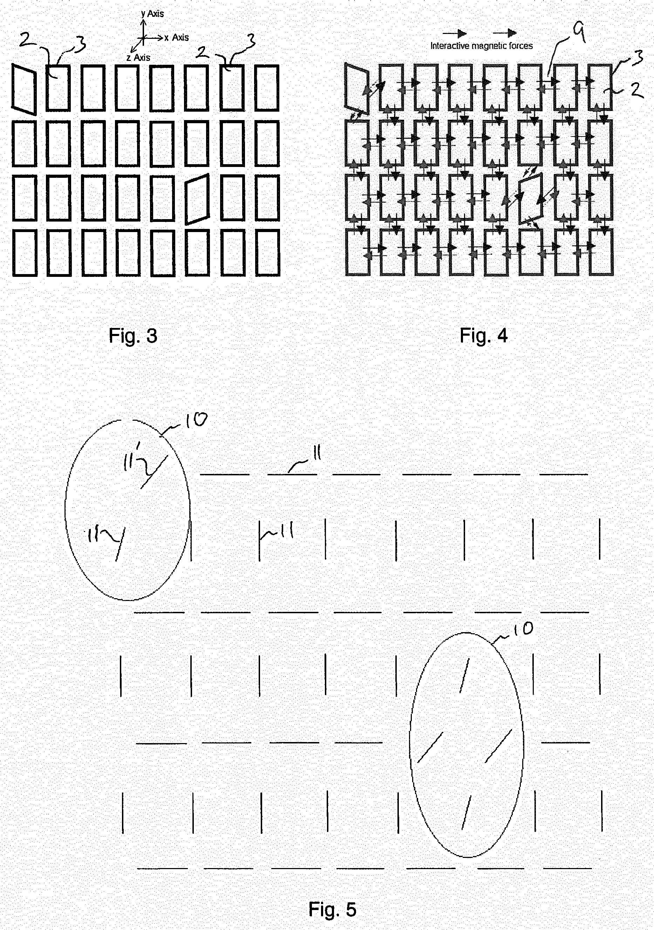

The effect of this is illustrated schematically in Figures 3 and 4. Figure 3 shows schematically a plan view of a number of supports 3 / solar panels 2. Most of the supports 3 / solar panels 2 have been positioned correctly and are therefore aligned with each other. However, two supports 3 / solar panels 2 have not been positioned correctly and are therefore out of alignment. These are the support 3 / solar panel 2 at the top left corner and third from the right in the third row in the figure. Figure 4 shows schematically a corresponding map of the magnetic fields 9. The different interaction of the magnetic fields 9 around the edges of the incorrectly aligned supports 3 / solar panels 2 can clearly be seen. This is further illustrated by the simplified schematic magnetic interactive force map of Figure 5. In Figure 5, the incorrectly aligned supports 3 / solar panels 2 are indicated by rings. The different interacting magnetic fields arising around the incorrectly aligned supports 3 / solar panels 2 are indicated by lines 11', which can be compared to the lines 11 that indicate the similar or same interacting magnetic fields arising around the correctly aligned supports 3 / solar panels 2.

Accordingly, in the present examples, an incorrectly aligned support 3 and/or solar panel 2 can be identified in an automated manner and without requiring a person to physically inspect a (potentially large) number of supports 3 and solar panels 2 in for example a solar farm. The attention of an operator or the like can be drawn to the incorrectly aligned support 3 and/or solar panel 2 so that remedial action can be taken, for example to repair or replace the apparatus 1 or one or more components of the apparatus 1 concerned.

It will be understood that the or each processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for mounting a solar energy device, the apparatus comprising:
a support on or in which a solar energy device may be mounted, the support being movable so as to be able to track movement of the Sun; and
a device for providing a measure of the separation of the support from a support of an adjacent apparatus for mounting a solar energy device.

2. Apparatus according to claim 1, comprising a motor for moving the support.

3. Apparatus according to claim 1 or claim 2, comprising a solar energy device mounted in or on the support.

4. Apparatus according to any of claims 1 to 3, wherein the device is a magnet.

5. Apparatus according to claim 4, wherein the device is a permanent magnet.

6. Apparatus according to claim 4, wherein the device is an electromagnet.

7. Apparatus according to claim 6, wherein the apparatus is arranged such that the electromagnet is powered in use by a solar energy device mounted on or in the apparatus.

8. A solar farm comprising a plurality of apparatus according to any of claims 4 to 7, wherein at least one edge of a support of an apparatus has a magnet device and at last one adjacent edge of an adjacent apparatus has a magnet device, the magnet devices being for providing a measure of the separation between said adjacent edges.

9. A solar farm according to claim 8, wherein said magnet devices are arranged such that their magnetic fields are substantially aligned when the supports of said adjacent apparatus are aligned.

10. A method of operating a plurality of a plurality of apparatus, in which at least some of the apparatus comprise a support which carries a solar energy device and at least some of the apparatus comprise a device for providing a measure of the separation of the support from the support of an adjacent apparatus, the supports being movable so as to be enable the solar energy device to track movement of the Sun, the method comprising:
moving at least some of the supports to cause their solar energy devices to track movement of the Sun; and
obtaining a measure of the separation of a support from an adjacent support; and
identifying from the measure of the separation a solar energy device that has not been moved so as to be positioned correctly.

11. A method according to claim 10, wherein the measure of the separation of a support from an adjacent support is obtained from the interaction of magnetic fields produced by magnets on the adjacent supports.

12. A method according to claim 11, wherein at least some of the magnets are electromagnets.
